**Europäisches Patentamt**

**European Patent Office**

**Office européen des brevets**

(19)

(11) Veröffentlichungsnummer: **0 173 842**
**A2**

(12) # EUROPÄISCHE PATENTANMELDUNG

(21) Anmeldenummer: **85109151.2**

(22) Anmeldetag: **22.07.85**

(51) Int. Cl.⁴: **H 04 L 25/49**

(30) Priorität: **08.08.84 DE 3429278**

(43) Veröffentlichungstag der Anmeldung:
**12.03.86 Patentblatt 86/11**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Pospischil, Reginhard, Dr.-Ing.**
**Gabriel v. Seidl Strasse 15**
**D-8032 Gräfelfing(DE)**

(54) **Selbstsynchronisierender Entwürfler.**

(57) Selbstsynchronisierender Entwürfler für hohe Bitraten mit einer Anzahl parallel arbeitender Entwürflerstufen, die jeweils die Reihenschaltung eines ersten und eines zweiten Modulo-2-Addierers und wenigstens eine Schieberegisterstufe enthalten; zur Unterdrückung von Kurzperioden kann zwischen 1. und 2. Modulo-2-Addierer ein dritter Modulo-2-Addierer eingefügt sein. durch den bei Auftreten von Kurzperioden wenigstens ein Bit des durchlaufenden Signals invertiert wird.

Die Anwendung kann alternativ zu bisherigen Entwürflern erfolgen, wobei die Verarbeitungsgeschwindigkeit auf einen Bruchteil der bisherigen verringert ist und dadurch auf eine billigere Halbleitertechnologie (CMOS) zurückgegriffen werden kann.

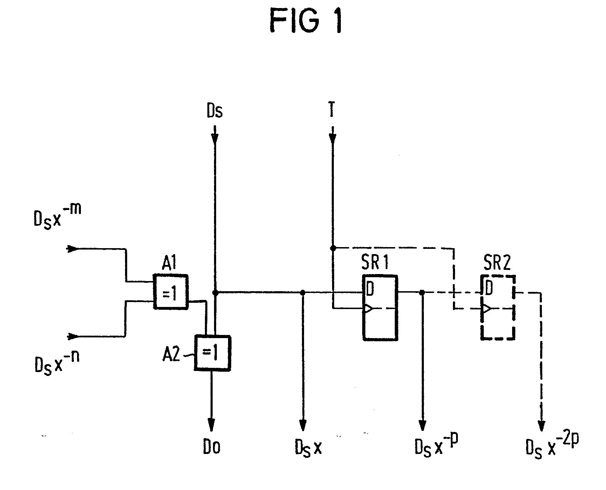

.FIG 1

EP 0 173 842 A2

**0173842**

Siemens Aktiengesellschaft          Unser Zeichen:
Berlin und München                  84 P 1587 E

Selbstsynchronisierender Entwürfler

Die Erfindung betrifft einen selbstsynchronisierenden
Entwürfler entsprechend dem Oberbegriff des Patentanspruchs 1.

Bei der digitalen Signalübertragung können Impulsmuster
auftreten, die einen störenden Gleichstromanteil aufweisen, oder deren Energieanteil bei bestimmten diskreten
Frequenzen besonders hoch ist. Zur Vermeidung dieser
Impulsmuster wird das zu übertragende digitale Signal
durch Modulo-2-Addition mit einer Pseudo-Zufallsfolge
sendeseitig verwürfelt. Empfangsseitig erfolgt durch
eine weitere Modulo-2-Addition mit der bereits sendeseitig verwendeten Pseudo-Zufallsfolge die Entwürflung.
Die dabei notwendige Synchronisation der sendeseitig
und empfangsseitig verwendeten Pseudo-Zufallsgeneratoren
kann durch Verwendung freilaufender, sogenannter multiplikativer bzw. selbstsynchronisierender Verwürfler und
Entwürfler umgangen werden.

Mit dem weiteren Ausbau des digitalen Fernmeldenetzes
werden zwischen zentralen Punkten dieses Netzes Übertragungseinrichtungen für Signale sehr hoher Schrittgeschwindigkeit erforderlich. Daraus ergibt sich die
Notwendigkeit, Verwürfler und Entwürfler für digitale
Signale sehr hoher Taktfrequenz aufzubauen.

Aus den Siemens Forschungs- und Entwicklungsberichten
Band 6 (1977) Nr. 1, Seiten 1 bis 5 ist bereits eine
Möglichkeit bekannt, Entwürfler für digitale Signale
hoher Taktfrequenz aufzubauen. Die digitalen Signale

Ah 1 Or / 18.7.1984

0173842

werden dabei in mehreren parallelen Kanälen mit entsprechend niedrigerer Bitfolgefrequenz verwürfelt und die entstandenen Signale durch Multiplexen zusammengefaßt. Analog ist die Empfangsseite aufgebaut, bei der sich an einen Demultiplexer die parallele Entwürfelung in mehreren Kanälen anschließt. Damit ergibt sich neben dem hohen Aufwand die Notwendigkeit, Multiplexer und Demultiplexer miteinander zu synchronisieren.

Von den Postbehörden ist die Verwürfelung für die einzelnen Hierarchiestufen des digitalen Weitverkehrsnetzes genormt. So ist beispielsweise von der internationalen Postbehörde in den CCITT-Empfehlungen unter V27 bis ein Verwürfler mit einer Verwürflerperiode von 127 Bit und ein entsprechender Entwürfler vorgeschrieben.

Die Aufgabe bei der vorliegenden Erfindung besteht darin, einen auch für die Übertragung digitaler Signale hoher Bitfolgefrequenz geeigneten selbstsynchronisierenden Entwürfler zu finden, der bei vergleichsweise geringerem Aufwand auf eine Demultiplexeinrichtung verzichtet und dessen Periode unabhängig von der Arbeitsgeschwindigkeit wählbar ist, außerdem muß eine Unterdrückung unerwünschter Kurzperioden mit vertretbarem Aufwand möglich sein.

Erfindungsgemäß wird die Aufgabe bei einem selbstsynchronisierenden Entwürfler der eingangs genannten Art durch die im Kennzeichen des Patentanspruchs 1 enthaltenen Merkmale gelöst.

Besonders vorteilhaft bei der erfindungsgemäßen Lösung ist der auch bei längeren Entwürflern übersichtliche Aufbau aus rein digitalen Gliedern, der eine Integration wesentlich erleichtert.

Bevorzugte Weiterbildungen des erfindungsgemäßen Verwürflers sind in den Patentansprüchen 2 und 3 beschrieben.

Die Erfindung soll im folgenden anhand der Zeichnung
näher erläutert werden.

In der Zeichnung zeigt

Fig. 1 die Schaltung einer einzelnen Entwürflerstufe,

Fig. 2 die Schaltung eines Entwürflers mit vier parallelen Entwürflerstufen und mit einer Periode von 127 Bit,

Fig. 3 die Schaltung eines Entwürflers mit fünf parallelen Entwürflerstufen mit einer Verwürflerperiode von 127 Bit und einer zusätzlichen Einrichtung zur Unterdrückung von Kurzperioden.

Die in der Fig. 1 dargestellte Verwürflerstufe ist Teil
eines n-stufigen Entwürflers. Die Entwürflerstufe enthält einen ersten und einen zweiten Modulo-2-Addierer A1,
A2 sowie eine erste und gegebenenfalls eine zweite
Schieberegisterstufe SR1, SR2. Die Entwürflerstufe dient
zur Entwürfelung des p-ten-Bits des digitalen Signals,
so daß am Ausgang der ersten Schieberegisterstufe SR1
das entsprechende verwürfelte Bit $Ds\,x^{-p}$ und am Ausgang
der zweiten Schieberegisterstufe SR2, eine Taktperiode
später, das verwürfelte Bit $Ds\,x^{-2p}$ abgegeben wird, während das Ausgangssignal Do der Entwürflerstufe vom Ausgang des zweiten Modulo-2-Addierer A2 entnehmbar ist.
Die erste Schieberegisterstufe SR1 entspricht also bezogen auf das Signal am Eingang Ds der p-ten Schieberegisterstufe des gesamten Entwürflers. Eine einzelne Entwürflerstufe enthält einen Eingang für das Ausgangssignal
$Ds\,x^{-n}$ der n-ten Entwürflerstufe E1 und das Ausgangssignal $Ds\,x^{-m}$ der m-ten Entwürflerstufe.

Beide Eingänge sind gleichzeitig die Eingänge des ersten
Modulo-2-Addierers A1, dessen Ausgang mit dem einen Eingang des zweiten Modulo-2-Addierers A2 verbunden ist,
dessen anderer Eingang mit dem Eingang für das in dieser
Stufe zu entwürfelnde Eingangssignal Ds verbunden ist.
Der Ausgangsanschluß des zweiten Modulo-2-Addierers A2
ist der Ausgangsanschluß für das entwürfelte Ausgangssignal Do dieser Stufe. Der Eingang für das zu entwürfelnde Signal Ds ist außerdem mit dem Eingang der ersten
Schieberegisterstufe SR1 verbunden, die ebenso wie die
zweite aus einem getakteten D-Flip-Flop besteht, deren
Ausgang mit dem D-Eingang einer zweiten Schieberegisterstufe SR2 verbunden sein kann.

Die Frequenz des Taktsignals T für die Schieberegisterstufen entspricht dem Parallel-Bit-Takt, also dem Bit-
Takt der digitalen Signale geteilt durch die Anzahl p
der parallelen Eingänge des Verwürflers. Mit n ist dabei
die Anzahl der Schieberegisterstufen des Verwürflers bezeichnet, während als m-te Stufe diejenige bezeichnet
wird, deren Ausgangssignal neben dem der n-ten Stufe auf
den Eingang rückgekoppelt wird, wobei m wenigstens um
eins kleiner als n ist.

Beim bekannten selbstsynchronisierenden seriellen Entwürfler sind bekanntermaßen der Ausgang der m-ten und
der Ausgang der n-ten Stufe über wenigstens einen Modulo-
2-Addierer mit dem Eingang der ersten Schieberegisterstufe verbunden. Im vorliegenden Falle sind die Entwürflerstufen mit einer oder zwei Schieberegisterstufen parallel angeordnet, wobei jede der p Entwürflerstufen über
einen Eingang verfügt und die Eingänge beispielsweise
mit den parallelen Ausgängen eines Serien-Parallel-Wandlers als Quelle eine digitalen Signals mit p parallelen
Bits verbunden sind. Für den Aufbau eines Entwürflers mit
n Entwürflerstufen werden n-p Entwürflerstufen mit jeweils zwei Schieberegisterstufen und 2 p-n Entwürflerstufen mit jeweils einer Schieberegisterstufe benötigt. In Schieberichtung gesehen folgen dabei zunächst die n-p Entwürflerstufen mit zwei Schieberegisterstufen, an die sich die 2 p-n Entwürflerstufen mit nur einer Schiebe-gisterstufe anschließen. Bei einer Schieberichtung von links nach rechts hat dann die erste Entwürflerstufe links von der betrachteten Entwürflerstufe die Ausgangs-signale Ds $x^{+1}$, Ds $x^{1-p}$ und Ds $x^{1-2p}$, sofern es sich um eine Entwürflerstufe mit zwei Schieberegisterstufen handelt und entsprechend die erste folgende Entwürflerstufe rechts von der betrachteten Entwürflerstufe die Ausgangs-signale Ds $x^{-1}$, Ds $x^{-1-p}$ und Ds $x^{-1-2p}$. Entsprechend hat die zweite Entwürflerstufe links von einer betrachteten Stufe die Ausgangssignale Ds $x^{2}$, Ds $x^{2-p}$ und Ds $x^{2-2p}$ während die zweite Entwürflerstufe rechts an der betrachteten Stufe die Ausgangssignale Ds $x^{-2}$, Ds $x^{-2-p}$ und Ds $x^{-2-2p}$ hat.

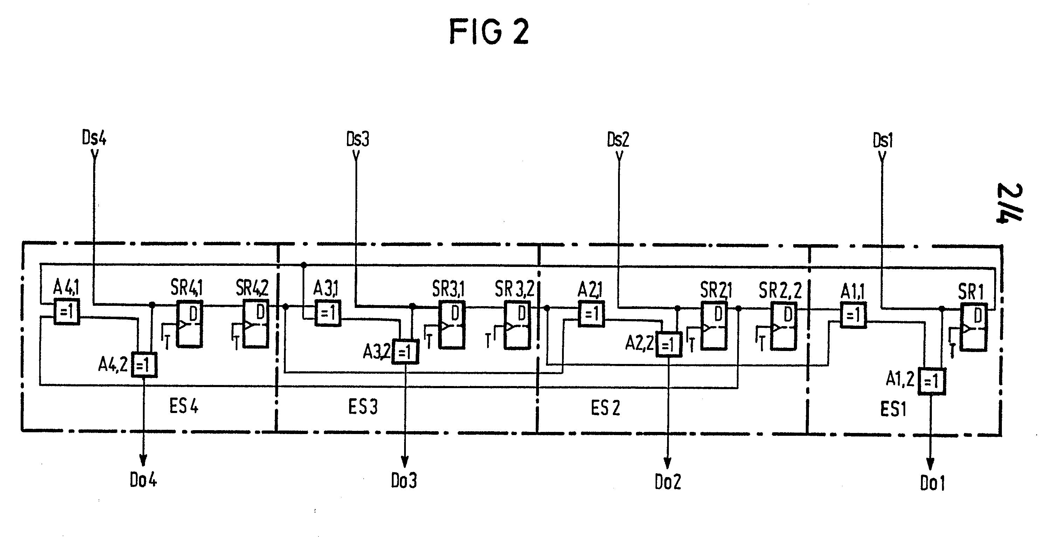

In der Fig. 2 ist die Zusammenschaltung von vier Ent-würflerstufen nach der Fig. 1 zu einem Entwürfler dargestellt, der sieben Schieberegisterstufen mit Rückkopplungen nach der sechsten und siebten Schieberegisterstufe umfaßt und über vier parallele Eingänge verfügt. Entsprechend Fig. 1 sind also p = 4, n = 7 und m = 6, wobei die vier Eingänge für Signale Di und die vier Ausgänge für Signale Ds parallel geschaltet sind. Für eine serielle Übertragung sind also dem Entwürfler ein vierstufiger Serien-Parallel-Wandler vor- und ein vierstufiger Parallel-Serien-Wandler nachzuschalten. Die Serien-Parallel-Wandlungen und die entsprechenden Parallel-Serien-Wandlungen müssen wegen der Speichereigenschaften der Wandler nicht bitsynchron erfolgen, auch eine Wortsynchronisation zwischen sendeseitigen Verwürfler (Scrambler) und empfangsseitigem Entwürfler (De-scrambler) ist nicht erforderlich.

0173842

Der Entwürfler nach der Fig. 2 enthält vier Entwürflerstufen ES1 ... ES4, die jeweils einen Eingang Ds1 ... Ds4 zur parallelen Aufnahme von 4 Bit des zu entwürfelnden digitalen Signals und einen Ausgang Do1 ... Do4 aufweisen. Mit insgesamt $n = 7$ Schieberegisterstufen ergibt sich eine Periode von $2^7-1 = 127$ Bit.

Entsprechend der vorstehend geschilderten Regel folgen in Schieberichtung zunächst $n - p = 3$ Entwürflerstufen mit zwei Schieberegistern und daran anschließend $2p -n = 1$ Entwürflerstufe mit nur einer Schieberegisterstufe, folglich hat die ersten Entwürflerstufe ES1 nur eine Schieberegisterstufe SR1. Die übrigen Entwürflerstufen ES2, ES3, ES4 enthalten demgegenüber jeweils zwei Schieberegisterstufen SR2.1, SR2.2, SR3.1, SR3.2, SR4.1, SR4.2, die entsprechend der Fig. 1 miteinander und mit dem entsprechenden Eingang verbunden und außerdem an eine gemeinsame Taktquelle T angeschlossen sind. Die zweiten Eingänge der ersten Modulo-2-Addierer A1.1, A2.1, A3.1 der ersten bis dritten Entwürflerstufe sind jeweils mit dem Ausgang der zweiten Schieberegisterstufe der vorhergehenden Entwürflerstufe, also mit den Schieberegisterstufen SR2.2, SR3.2, SR4.2 verbunden. Der entsprechende Eingang des 1. Modulo-2-Addierers A4.1 der vierten Entwürflerstufe ES4 ist mit dem Ausgang der ersten und einzigen Schieberegisterstufe SR1 der ersten Entwürflerstufe ES1 verbunden. Die ersten Eingänge der ersten Modulo-2-Addierer A1.1, A2.1 der ersten und der zweiten Entwürflerstufe ES1, ES2 sind jeweils mit dem Ausgang der zweiten Schieberegisterstufe SR3.2, SR4.2 der jeweils zweiten vorhergehenden Entwürflerstufe ES3, ES4 verbunden, also ist der erste Eingang des Modulo-2-Addierers A1.1 an den Ausgang der Schieberegisterstufe SR3.2 und der erste Eingang des Modulo-2-Addierers A2.1 an den Ausgang der Schieberegisterstufe SR4.2 angeschlossen. Eine Änderung ergibt sich hinsichtlich der dritten und der vierten Entwürflerstufe ES3, ES4, da im Hinblick auf die entsprechende zyklische Vertauschung die beiden ersten Eingänge der jeweils ersten Modulo-2-Addierer A3.1, A4.1 miteinander und mit dem Ausgang der ersten und einzigen Schieberegisterstufe SR1 der ersten Entwürflerstufe verbunden sind. Das entwürfelte Signal ergibt sich aus dem Eingangssignal Ds der betreffenden Stufe und den Ausgangssignalen Ds $x^{-6}$ und Ds $x^{-7}$ der sechsten und der siebenten Stufe rechts der betrachteten Entwürflerstufe.

Bei den bekannten Entwürflern ist es in Abhängigkeit vom Eingangssignalmuster möglich, daß bei bestimmten Eingangssignalmustern bestimmte Zustände der Entwürflerperiode übersprungen werden und periodische Ausgangssignalfolgen vergleichsweise kurzer Dauer auftreten. Aus diesem Grunde enthalten praktisch angewendete Entwürfler zusätzlich weitere Schieberegisterstufen. In den CCITT-Empfehlungen V27 und V27bis werden beispielsweise ein 7-stufiger Verwürfler und ein entsprechender Entwürfler beschrieben, die zur Vermeidung von Kurzperioden um weitere 5 Schieberegisterstufen auf 12 Stufen ergänzt sind. Beim Entwürfler nach der Empfehlung V27bis wird dann jeweils der Inhalt der Stufen 8, 9 und 12 mit dem logischen Zustand am Eingang der Schieberegisterkette verglichen. Stimmt eines der verglichenen Paare für einen Zeitraum von mindestens 33 Bit kontinuierlich miteinander überein, so wird das nächstfolgende Eingangsbit invertiert, so daß längerperiodische Ausgangssignalfolgen mit 1, 2, 3, 4, 6, 8, 9 und 12 Bit Periodendauer unterdrückt werden. Mit dem beschriebenen Zusatzaufwand können also beispielsweise periodische Ausgangssignalfolgen mit 5, 7, 10 und 11 Bit Periodendauer nicht unterdrückt werden, eine Unterdrückung auch dieser Kurzperioden würde jedoch den Aufwand weiter steigen lassen, so daß bei der Entwicklung derartiger Entwürfler ein anwendungsbezogener Kompromiß erforderlich ist. Dieser Kompromiß ist auch im Hinblick auf die Anwendung der Entwürfler bei höheren Übertragungsgeschwindigkeiten erforderlich, da eine Verlängerung der Schieberegisterketten die Einsatzmöglichkeiten bei höheren Übertragungsgeschwindigkeiten einschränkt.

Bei dem parallelen Entwürflern nach der Fig. 2 und auch bei anderen Entwürflern, die die in der Fig. 1 beschriebene Entwürflerstufe in Parallelbetrieb verwenden, müssen alle Entwürflerstufen mittels einer Einrichtung zur Kurzperiodenunterdrückung auf das Auftreten von Kurzperioden überwacht werden, wenn der Entwürfler mit bekannten seriellen Entwürflern kompatibel sein soll, die die Schieberegisterstufen in Serienschaltung enthalten.

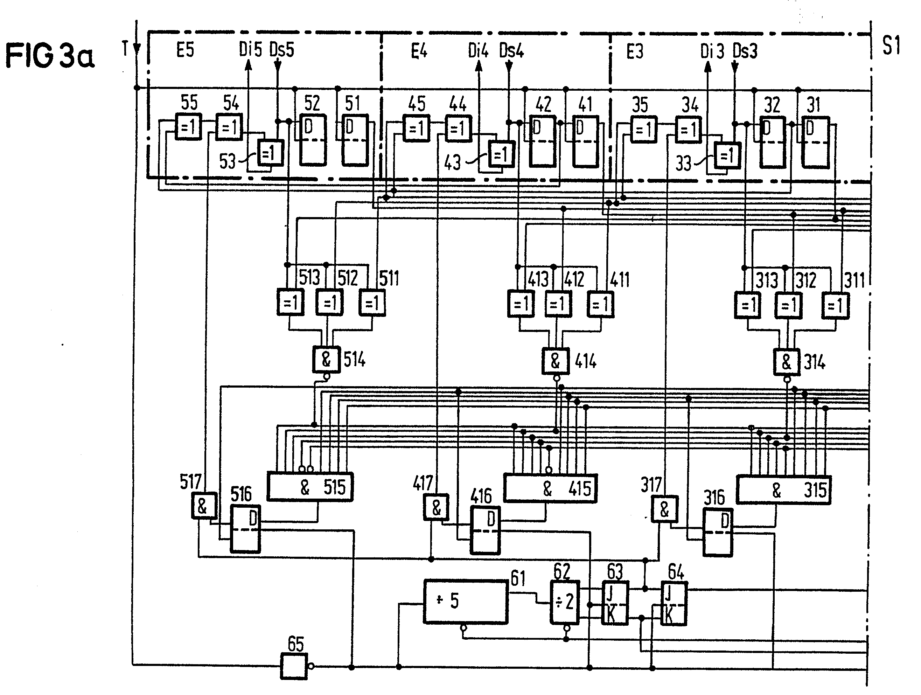

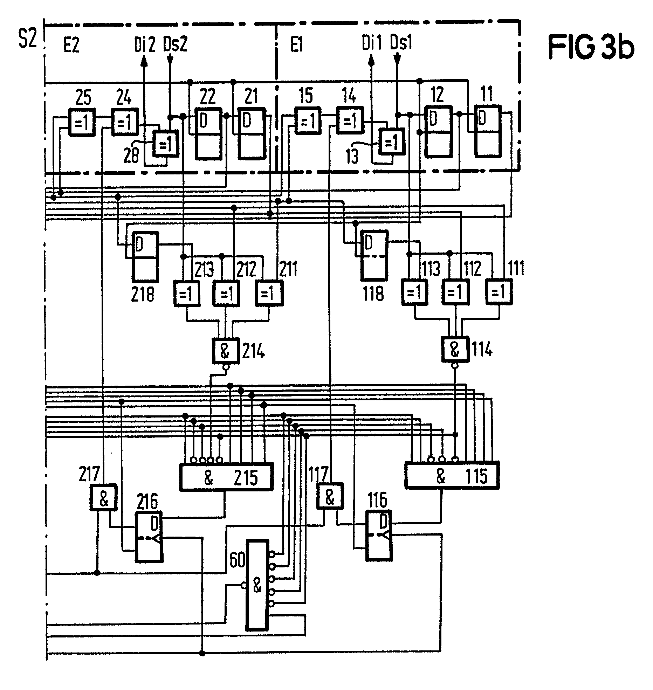

Die Unterdrückung unerwünschter Kurzperioden erfolgt im Prinzip mittels einer an den eigentlichen Entwürfler angeschlossenen Zähleinrichtung für übereinstimmende Bits, die im Abstand einer zu unterdrückenden Kurzperiode auftreten. Die Zähleinrichtung gibt bei Überschreiten einer voreingestellten Anzahl übereinstimmender Bits einen Impuls ab, der an die Entwürflerstufen weitergeleitet wird. Die Zähleinrichtung bildet also den wesentlichen Teil der Einrichtung zur Kurzperiodenunterdrückung, zur Verbindung der Entwürflerstufen mit der Zähleinrichtung sind die Entwürflerstufen entsprechend Fig. 3 um einen weiteren Modulo-2-Addierer 54, 44, 34, 24, 14 ergänzt. Dieser Addierer ist zwischen erstem und zweitem Modulo-2-Addierer A1, A2, nach der Fig. 1 so eingefügt, daß der eine Eingang des dritten Modulo-2-Addierers mit dem Ausgang des ersten Modulo-2-Addierers verbunden ist, daß der zweite Eingang des dritten Modulo-2-Addierers mit einem zugeordneten Ausgang der Einrichtung zur Kurzperiodenunterdrückung verbunden ist und daß an den Ausgang des dritten Modulo-2-Addierers derjenige Eingang des zweiten Modulo-2-Addierers angeschlossen ist, der bisher mit dem Ausgang des ersten Modulo-2-Addierers verbunden ist. In

0173842

VPA 84 P 1587 E

der Fig. 3 ist ein Entwürfler aus 5 derartig erweiterten Entwürflerstufen E1 ... E5 dargestellt, wobei der linke Teil der Fig. 3 mit den Entwürflerstufen E3, E4, E5 in Fig. 3a und der rechte Teil mit den Entwürflerstufen E1, V2 in Fig. 3b dargestellt ist. Beide Schaltungsteile sind durch die Linien S1, S2 voneinander getrennt. Der Entwürfler nach der Fig. 3 besitzt 5 parallele Eingänge so daß p = 5 ist, außerdem sind zur Erzeugung einer Schiebeperiode von $2^7-1 = 127$ Bit n = 7 Schieberegisterstufen verwendet, wobei die Rückkopplung nach der m = 6. und n = 7. Stufe erfolgt. Entsprechend der bereits beschriebenen Regel sind deshalb zunächst n - p = 7-5 = 2 Entwürflerstufen E5 und E4 mit jeweils zwei Schieberegisterstufen 51, 52 und 41, 42 vorgesehen, an die sich 2p-n = 10-7 = 3 Entwürflerstufen E3, E2, E1 mit jeweils einer Schieberegisterstufe 32, 22, 12, anschließen.

Die in den Entwüiflerstufen E1, E2, E3 zusätzlich enthaltenen weiteren Schieberegisterstufen 31, 21, 11 sind also für die Entwürflerfunktion nicht erforderlich, sie sind bereits Teil der Einrichtung zur Kurzperiodenunterdrückung. Zu dieser Einrichtung gehören 5 Gruppen aus jeweils drei Modulo-2Addierern, deren Ausgänge über je ein NAND-Gatter 114, 214, 314, 414, 514 zusammengefaßt sind. Jede dieser 3er-Gruppen ist einer Entwürflerstufe zugeordnet, wobei die ersten Eingänge jedes der Modulo-2-Addierer 111, 112, 113; 211, 212, 213; 311, 312, 313; 411, 412, 413; 511, 512, 513 miteinander und mit dem D-Eingang der ersten Schieberegisterstufe der zugeordneten Entwürflerstufe verbunden sind. Die zweiten Eingänge der beiden Modulo-2-Addierer der fünf Gruppen sind mit den Ausgängen der einzelnen Schieberegisterstufen so verbunden, daß in jeder Dreiergruppe jeweils das am Eingang der ersten Schieberegisterstufe einer Verwürflerstufe anliegende Bit mit dem 8., 9. und 12. gespeicherten Bit verglichen wird. Da die Entwürflerstufen insgesamt nur 10 Schieberegisterstufen enthalten und damit nur 10 Bit gespeichert werden können, wurden zusätzlich die D-Flip-Flops 118 und 218 vorgesehen, die den zweiten Eingängen der ersten Modulo-2-Addierer 113, 213 der ersten und der zweiten 3er-Gruppe vorgeschaltet und mit der gleichen Taktquelle T wie die Schieberegisterstufen der Entwürflerstufen verbunden sind und deren D-Eingänge mit den Ausgängen der zweiten Schieberegisterstufen der vierten bzw. fünften Entwürflerstufe verbunden sind. Bei Gleichheit des am Eingang der ersten Schieberegisterstufe einer k-ten Entwürflerstufe anliegenden Bits mit einem der gespeicherten Bits Nr. 8, 9 und 12 ergibt sich am Ausgang des entsprechenden k-ten NAND-Gatters 114, 214, 314, 414, 514 jeweils der logische Einspegel, der über jeweils einen invertierenden Eingang an das NAND-Gatter 60 abgegeben wird, so daß dieses über seinen invertierenden Ausgang die Teilerkette 61, 62, 63, 64 freigibt. Die Teilerkette ist über den Inverter 65 an die Quelle für den Worttakt T der digitalen Signale angeschlossen und enthält einen ersten Teiler 61 und einen zweiten Teiler 62 mit dem Teilerverhältnis 2:1 und 2 nachgeschaltete JK-Flip-Flops.

Die Einrichtung zur Kurzperiodenunterdrückung enthält weiterhin fünf UND-Gatter 115, 215, 315, 415, 515 mit jeweils einer ersten Gruppe von fünf Eingängen, die jeweils getrennt mit den Ausgängen der NAND-Gatter 114, 214, 314, 414, 514 verbunden sind und eine zweite Gruppe von jeweils vier Eingängen. Jeder dieser vier Eingänge der zweiten Gruppe ist an den invertierenden Ausgang eines der D-Flip-Flops 116, 216, 316, 416, 516 angeschlossen, deren D-Eingänge an den Ausgang eines der UND-Gatter mit neun Eingängen angeschlossen sind. Die invertierenden Ausgänge dieser D-Flip-Flops sind jeweils mit einem Eingang eines derjenigen Gatter verbunden, an dessen Gatterausgang das D-Flip-Flop nicht angeschlossen ist. Die nichtinvertierenden Ausgänge der D-Flip-Flops
sind über ein weiteres UND-Gatter 117, 217, 317, 417,
517 mit den zweiten Eingängen der dritten Modulo-2-Addierer jeder Entwürflerstufe E 1 ... F 5 verbunden. Die zweiten Eingänge der an die dritte bis fünfte Entwürflerstufe
angeschlossenen UND-Gatter sind mit dem Ausgang des in
der Teilerkette enthaltenen JK-Flip-Flops 63 verbunden,
diesem ist ein weiteres JK-Flip-Flop 64 nachgeschaltet,
dessen Ausgang mit den zweiten Eingängen der UND-Gatter
117, 217 verbunden sind, die ausgangsseitig mit der ersten
bzw. zweiten Entwürflerstufe verbunden sind.

Die beschriebene Freigabe der Teilerkette 61 bis 64
führt dazu, daß über eines der freigegebenen UND-Gatter
117, 217, 317, 417, 517 und die zusätzlichen dritten
Modulo-2-Addierer in einer der Entwürflerstufen E1 bis
E5 ein Bit invertiert und dadurch eine auftretende Kurzperiode beendet wird. Ab dem erstmaligen Erkennen des
Impulsmusters entsprechend einer Kurzperiode wird die
Periodizität für jedes folgende Bit erkannt, solange
das Eingangsmuster erhalten bleibt, damit sind spätestens
nach einer Paralleltaktperiode von 5 Bit alle UND-Gatter
114, 214, 314, 414, 514 auf dem logischen Einspegel. Die
UND-Gatter mit neun Eingängen 115, 215, 315, 415, 515
zusammen mit den nachgeschalteten D-Flip-Flops 116, 216,
316, 416, 516 dienen nun zur Speicherung der Information
darüber, bei welchem am Eingang des ersten Schieberegisters einer Entwürflerstufe  anliegenden Bits zum
ersten Mal eine Kurzperiode erkannt wurde. Die Änderung
des logischen Wertes eines am Eingang einer Schieberegisterstufe einer Entwürflerstufe  anliegenden Bits erfolgt nicht unmittelbar nach dem erstmaligen Erkennen
des Kurzperiodenkriteriums. Im vorliegenden Falle ist die
Zuordnung der Ausgänge der Gatter 114, 214, 314, 414,
514 zu den Eingängen der UND-Gatter 115, 215, 315, 415,
515 so, daß jeweils erst das 33. Bit nach der erstmaligen Erkennung invertiert wird. Erfolgt im vorliegenden Falle die Erkennung beispielsweise erstmalig dadurch, daß der Ausgang des der ersten Entwürflerstufe zugeordneten UND-Gatters 114 auf den Wert logisch "1" geht, dann wird nach 6 x 5 = 30 Bittaktzeiten über das der dritten Entwürflerstufe zugeordnete UND-Gatter 315, das nachgeschaltete D-Flip-Flop 316 und das damit verbundene UND-Gatter 317 im dritten Modulo-2-Addierer 34 der dritten Entwürflerstufe E3 ein Bit invertiert.

Die Eingänge des UND-Gatters 60 können statt mit den Ausgängen der UND-Gatter 114 ... 514 auch mit den nichtinvertierenden Ausgängen der D-Flip-Flops 116 ... 516 verbunden sein. In diesem Falle ist durch die zusätzliche Teilerwirkung dieser D-Flip-Flops das Teilerverhältnis des Frequenzteilers 61 von 5:1 auf 4:1 zu verringern, es ergibt sich dadurch eine Unterdrückung unerwünschter Impulsspitzen auf der Verbindungsleitung zwischen dem Ausgang des UND-Gatters 60 und den Rücksetzeingängen der Teilerstufen 61 und 62.

4 Patentansprüche
4 Figuren

0173842
84 P 1587 E

Patentansprüche                                    Unser Zeichen:

1. Selbstsynchronisierender Entwürfler mit n getakteten Schieberegisterstufen zur Entwürfelung eines Signals mit einer Periode von $2^n-1$ Bit, wobei der Ausgang wenigstens einer Schieberegisterstufe mit dem Eingang eines Modulo-2-Addierers verbunden ist, d a d u r c h   g e k e n n - z e i c h n e t ,   daß p parallele Eingänge für jeweils eines von p parallelen Bits des verwürfelten digitalen Signals (DS) vorgesehen sind, daß die Eingänge entsprechend der Folge der ankommenden Bits, mit dem p-ten Bit am ersten Eingang und den folgenden Bits an den nächsten Eingängen, geordnet und mit jeweils einer, wenigstens eine Schieberegisterstufe und wenigstens einen Modulo-2-Addierer enthaltenden Entwürflerstufe verbunden sind, daß die Anzahl p der parallelen Eingänge wenigstens um 1 kleiner als die Anzahl n der in den Entwürflerstufen enthaltenen getakteten Schieberegisterstufen ist, daß in Schieberichtung zunächst n-p Entwürflerstufen mit 2 getakteten Schieberegisterstufen und daran anschließend 2p-n Entwürflerstufen mit nur einer getakteten Schieberegisterstufe angeordnet sind, daß die Entwürflerstufen einen ersten und einen zweiten Modulo-2-Addierer (A1, A2) enthalten, wobei der Ausgang des ersten Modulo-2-Addierers mit dem einen Eingang des zweiten Modulo-2-Addierers verbunden ist, dessen anderer Eingang mit einem der p parallelen Eingänge für das zu entwürfelnde Signal verbunden ist, daß am Ausgang des zweiten Modulo-2-Addierers das entwürfelte Signal entnehmbar ist, daß der Eingang für das verwürfelte Signal außerdem mit dem Eingang einer ersten getakteten Schieberegisterstufe (SR1) verbunden ist, an derem Ausgang das um eine Taktperiode verzögerte verwürfelte digitale Signal ($Ds\ x^{-p}$) entnehmbar ist und außerdem der Eingang einer weiteren getakteten Schieberegisterstufe (SR2) angeschlossen ist, deren Takteingang dem Takteingang der ersten

Ah 1 Or / 23.7.1984

Schieberegisterstufe parallelgeschaltet ist und an deren Ausgang ein um zwei Taktperioden verzögertes verwürfeltes digitales Signal (Ds $x^{-2p}$) entnehmbar ist, daß die Taktfrequenz des den Schieberegisterstufen zugeführten Taktsignals (T) der Taktfrequenz der zu entwürfelnden digitalen Signale geteilt durch die Anzahl p der Entwürflerstufen entspricht und daß der eine Eingang des ersten Modulo-2-Addierers (A1) mit dem Ausgang einer Entwürflerstufe verbunden ist, an der das n-te vorhergehende Bit des entwürfelten digitalen Signals ansteht und daß der andere Eingang des ersten Modulo-2-Addierers mit einer Entwürflerstufe verbunden ist, an der das m-te vorhergehende Bit des verwürfelten digitalen Signals ansteht und daß m<n und ganzzahlig ist.

2. Selbstsynchronisierender Entwürfler nach Patentanspruch 1, d a d u r c h   g e k e n n z e i c h n e t , daß zur parallelen Verarbeitung von 4 Bit vier Entwürflerstufen (ES1 ... ES4) vorgesehen sind, die jeweils einen Eingang (Ds1 ... Ds4) zur parallelen Aufnahme von 4 Bit des zu entwürfelnden digitalen Signals aufweisen, daß die erste Entwürflerstufe (ES1) einen ersten Modulo-2-Addierer (A1.1) aufweist, dessen Ausgang mit dem Eingang eines zweiten Modulo-2-Addierers (A1.2) verbunden ist, dessen anderer Eingang mit dem Eingang (Ds1) der ersten Entwürflerstufe und dessen Ausgang mit dem Eingang einer ersten Schieberegisterstufe (SR1) sowie mit einem ersten Ausgang (D.1) für das erste Bit des entwürfelten digitalen Signals verbunden ist, daß der Takteingang der ersten Schieberegisterstufe (SR1) mit einer Quelle für ein Taktsignal (T) verbunden ist, das durch Frequenzteilung im Verhältnis 4:1 aus dem Taktsignal der zu entwürfelnden digitalen Signale erzeugt wurde, daß der erste Eingang des ersten Modulo-2-Addierers (A1.1) der ersten Entwürflerstufe (ES1) mit dem zweiten Eingang des ersten Modulo-2-Addierers (A2.1) der zweiten Entwürflerstufe (ES2) verbunden ist, daß der Ausgang dieses Modulo-2-Addierers (A2.1) mit dem ersten Eingang des zweiten Modulo-2-Addierers (A2.2) und dessen zweiter Eingang mit dem Eingang (Ds2) der zweiten Entwürflerstufe (ES2) verbunden ist, daß der Ausgang des zweiten Modulo-2-Addierers (A2.2) mit dem Ausgang (Do2) der zweiten Entwürflerstufe (ES2) verbunden ist, daß der Eingang der zweiten Entwürflerstufe außerdem mit dem Eingang der ersten Schieberegisterstufe (SR2.1) der zweiten Entwürflerstufe (ES2) verbunden ist, daß der Ausgang dieser Schieberegisterstufe (SR2.1) mit dem Eingang einer zweiten Schieberegisterstufe (SR2.2) der gleichen Entwürflerstufe (ES2) und außerdem mit dem ersten Eingang eines ersten Modulo-2-Addierers (A4.1) der vierten Entwürflerstufe (ES4) verbunden ist, daß der Ausgang der zweiten Schieberegisterstufe (SR2.2) der zweiten Entwürflerstufe (ES2) mit dem zweiten Eingang des ersten Modulo-2-Addierers (A1.1) der ersten Entwürflerstufe (ES1) verbunden ist, daß der erste Eingang des ersten Modulo-2-Addierers (A2.1) der zweiten Entwürflerstufe (ES2) mit dem zweiten Eingang eines ersten Modulo-2-Addierers (A3.1) der dritten Entwürflerstufe (ES3) verbunden ist, dessen Ausgang mit dem einen Eingang eines zweiten Modulo-2-Addierers (A3.2) der gleichen Entwürflerstufe verbunden ist, daß der andere Eingang des zweiten Modulo-2-Addierers (A3.2) mit dem Eingang (Ds3) der dritten Entwürflerstufe (ES3) und außerdem mit einem Eingang einer ersten Schieberegisterstufe (SR3.1) der dritten Entwürflerstufe (ES3) verbunden ist, daß der Ausgang (Ds3) der dritten Entwürflerstufe verbunden ist, daß der Ausgang der ersten Schieberegisterstufe der dritten Entwürflerstufe (ES3) mit dem Eingang einer zweiten Schieberegisterstufe (SR3.2) der gleichen Entwürflerstufe verbunden ist, daß der Ausgang der zweiten Schieberegisterstufe (SR3.2) mit dem zweiten Eingang des ersten Modulo-2-Addierers (A2.1) der zweiten Entwürflerstufe (VS2) verbunden ist, daß der erste Eingang des ersten Modulo-2-Addierers (A3.1) der dritten Entwürflerstufe (ES3) mit einem zweiten Eingang eines ersten Modulo-2-Addierers (A4.1) der vierten Entwürflerstufe (ES4) verbunden ist, daß dessen Ausgang mit dem einen Eingng eines zweiten Modulo-2-Addierers (A4.2) der vierten Entwürflerstufe (ES4) und dessen zweiter Eingang mit dem Eingang (Ds4) der vierten Verwürflerstufe verbunden ist, daß der Ausgang dieses zweiten Modulo-2-Addierers (A4.2) mit dem Ausgang (Do4) der vierten Entwürflerstufe (ES4) verbunden ist, daß der Eingng (DS4) dem Eingang einer ersten Schieberegisterstufe (SR4.1) der vierten Entwürflerstufe (ES4) verbunden ist, daß der Ausgang dieser zweiten Schieberegisterstufe (SR4.1) mit dem Eingang einer zweiten Schieberegisterstufe (SR4.2) der vierten Entwürflerstufe (ES4) verbunden ist und der Ausgang dieser Schieberegisterstufe mit dem zweiten Eingang des ersten Modulo-2-Addierers (A3.1) der dritten Entwürflerstufe (ES3) verbunden ist und daß die Takteingänge sämtlicher Schieberegisterstufen miteinander und mit der Quelle für das Taktsignal (T) verbunden sind.

3. Selbstsynchronisierender Entwürfler nach Patentanspruch 1, d a d u r c h   g e k e n n z e i c h n e t , daß die Unterdrückung von Kurzperioden dadurch erfolgt, daß in wenigstens einer Entwürflerstufe zwischen erstem und zweitem Modulo-2-Addierer ein dritter Modulo-2-Addierer (14, 24, 34, 44, 54) eingefügt ist, dessen einer Eingang mit dem Ausgang des ersten Modulo-2-Addierers und dessen Ausgang mit dem Eingang des zweiten Modulo-2-Addierers verbunden ist, und dessen zweiter Eingang an den Ausgang einer Zähleinrichtung für übereinstimmende Bits, die im Abstand einer zu unterdrückenden Kurzperiode auftreten, angeschlossen ist, wobei die Zähleinrichtung bei Überschreiten einer voreingestellten Anzahl übereinstimmender Bits einen Impuls ergibt.

FIG 1

$D_S x^{-m}$

$D_S x^{-n}$

A1 =1

A2 =1

Ds

Do

$D_S x$

T

SR 1 D

SR 2 D

$D_S x^{-p}$

$D_S x^{-2p}$

# FIG 2

FIG 3a

3/4

0173842

FIG 3b